# EUROPÄISCHE PATENTANMELDUNG

(11) **EP 2 998 058 A1**
(43) Veröffentlichungstag der Anmeldung: **23.03.2016**
(21) Anmeldenummer: 14192618.8
(22) Anmeldetag: 11.11.2014
(51) Int. Cl.: B23K 26/067, B23K 26/073, G02B 27/10

(54) **Vorrichtung zum Winkelbestimmen beim Laserstrahlteiler**

(30) Priorität: 19.09.2014 TW 103132403
(71) Anmelder: Youngtek Electronics Corporation, Hsinchu City 300, (TW)
(72) Erfinder: Chang, Ching Tsung, HsinChu City 300 (TW); Wu, Chao ching, HsinChu City 300 (TW)
(74) Vertreter: Schwerbrock, Florian

(57) **Zusammenfassung**

Bei der vorliegenden Neuheit handelt es sich um eine Vorrichtug beimLaserstrahleiter, bei der ein Mehrstrahlmodul zwischen der Lasereinheit und Refraktor angebracht ist. Durch dieser Gestaltung kann der Strahl aus der Lasereinheit durch die Einstellung des Mehrstahlmoduls die Maskegrafiken abtasten und radieren und durch die Aufreihensweise des Strahls unterschiedlich schneiden, sodass der Einschnitt vertieft werden kann oder die Schlitzbreite des Einschnitts gesteuert werden kann, wodurch praktische Anwendung und Benutzerfreundlichkeit isgesamt erhöht werden können.

## Beschreibung

### Technisches Gebiet

Bei der vorliegenden Neuheit handelt es sich um eine Vorrichtung zum Winkelbestimmen beim Laserstrahlteiler, insbesondere um eine Vorrichtung, bei der der Strahl aus der Lasereinheit durch Einstellung eines Mehrstrahlmoduls die Fotomaskegrafiken abtasten und redieren kann und die geeignet für die Anwendung bei der Waferbearbeitungsmaschine, Fotomaskeradierer oder bei ähnlichen Konstruktionen ist.

### Der Stand der Technik

Wegen des technologischen Fortschrittes werden viele technologische Produkte integriert, sodass die Bauteile wie Chips oder Wafer immer kleiner und präziser werden müssen. Das Werkzeug, mit dem die IC-Chips und optoelektrische Bauteile hergestellt werden, heißt Fotomaske. Wird ein Schaltplan für einen neuen Chip entworfen, so wird aus diesem Schaltplan eine Fotomaske hergestellt, mit der dann Wafer für schließlichen einzelnen IC-Chip oder optoelektrisches Bauteil hergestellt wird.

Das Produktionsverfahren des heutigen integrierten Schaltkreis ist in einer Tiefen-Sub-Nanometer-Generation gekommen. Die Technologie der optischen Lithografie wird immer wichtiger. Die optische Lithografie ist eine präzise Bearbeitungstechnik der Oberfläche. Es ist eine kombinierte präzise Bearbeitungstechnologie der Oberfläche aus Kopieren des Liniendiagramms und chemischer Korrosion, deren Ziel ist, eine genau der Maske entsprechende oder eine ergänzende Geometrie auf Silica- oder Metallfolie mit der Radierung-Technik zu produzieren. Heutzutage wird vor allem die Wellenlänge von 193mm aus einem ArF-Excimerlaser für die optische Lithografie eingesetzt. Die optische Lithografie ist ein komplexer technischer Prozess, der mehrere Produktionsschritten wie Abwaschen, Aufbringen einer Fotoresistschicht, Belichten, Entwickeln, Trocknen, Ätzen und Filmabstreifen usw. umfasst. Die Investitionen für die erforderlichen Geräte und die Wartungskosten der Geräte für die optische Lithographie sind sehr hoch. Desweiteren wird auch große Menge der Chemikalien benötigt. Alle diese Fakten führen zum Problem der überhöhte Produktionskosten und überlängerte Betriebszeit, insbesondere ist das Problem gravierend für die große Touch-Panel und das führt zur Rückgang der Qutoe der fehlerfreien Produkte.

In der herkömmlicher Technik der optischen Lithografie wird meinstens einzelnen Strahl eingesetzt. Mit dieser Technik bleibt der Schlitz der Fotomaske zwangläufig relativ klein, sodass die vorgegebenen Breite oder Tiefe der Schlitze nicht erreicht werden können.

Der Erfinder der vorliegenden Neuheit hat die oben beschriebenen Mängel erkannt und hoffe, dass eine Vorrichtung zum Winkelbestimmen beim Laserstrahlteiler bereitgestellt werden kann, mit der das Schneiden des tieferen und breiteren Schlitze gesteuert werden kann.

### Die Aufgabe der Erfindung

Die Aufgabe der vorliegenden Neuheit ist eine Vorrichtung zum Winkelbestimmen beim Laserstrahlteiler bereitzustellen. Durch die Gestaltung, dass ein Mehrstrahlmodul zwischen der Lasereinheit und dem Refraktor angebracht ist, kann der Strahl aus der Lasereinheit durch die Modulation des Mehrstahlmoduls die Maskegrafiken abtasten und radieren und durch die Aufreihensweise des Strahls unterschiedlich schneiden, sodass der Einschnitt vertieft werden kann oder die Schlitzbreite des Einschnitts gesteuert werden kann, wodurch praktische Anwendung und Benutzerfreundlichkeit isgesamt erhöht werden können.

Eine andere Aufgabe der vorliegenden Neuheit ist eine Vorrichtung zum Winkelbestimmen beim Laserstrahlteiler bereitzustellen. Der Strahl der Lasereinheit ist ein einzelner Strahl. Durch das Mehrstrahlmodul kann der Strahl aus der Lasereinheit sich in Mehrstrahl umwandeln, wodurch die Maskegrafiken vorweg oder wiederholt geschnitten werden können, sodass die Maskegrafiken über den Effekt des tieferen Schneidens verfügt und dadurch die prakische Anwendung insgesamt erhöht werden kann. (oder: sodass die Maskegrafiken imstande sind, die geschnittene Tiefe zu bestimmen und dadurch die Mönglichkeiten der praktischen Anwendung insgesamt erhöht werden können.

Noch eine weitere Aufgabe der vorliegenden Neuheit ist eine Vorrichtung zum Winkelbestimmen beim Laserstrahlteiler bereitzustellen. Durch ein Mehrstrahlmodul kann der einzelne Strahl aus der Lasereinheit in Mehrstrahl umgewandelt werden. Durch das Umdrehen des Mehrstrahlmoduls kann der Mehrstrahl in Anpassung des eingestellten Drehwinkels in geraden oder schrägen Lienien aufreihen, um das Ziel der Steuerung über das Schneiden der Schlitzbreite der Maskegrafiken zu erreichen, sodass die Maskegrafiken imstande sind, die geschnittene Schlitzbreite zu bestimmen, wodurch die Möglichkeiten der praktischen Anwendung insgesamt erhöht werden können.

Um die oben genannten Aufgaben zu lösen, umfasst die vorliegende Neuheit eine Lasereinheit, einen Refraktor und ein Fokusobjektiv. Die Lasereinheit kann Strahl ausstrahlen, der durch den Refraktor bis auf das Fokusobjektiv gebrochen wird. Das charakteristische Merkmal ist: Zwischen der Lasereinheit und dem Refraktor ein Mehrstrahlmodul angebracht ist, sodass Fotolithografie mit dem Strahl aus der Lasereinheit durch die Einstellung des Mehrstrahlmodul hergestellt werden kann.

Die Merkmale und Sonderheiten sowie der technische Inhalt der Erfindung wird im folgenden anhand in den Zeichnungen dargestellter Ausführungsbeispiel detailliert beschrieben. Die Zeichnungen dienen nur zur Referenzen und Erklärung, jedoch nicht zur Einschräkung der Erfindung.

### Kurze Beschreibung der Zeichnungen

Fig. 1 ist die schematische Darstellung der Ausstattung der vorliegenden Neuheit.
Fig. 2 ist eine schematische Darstellung der in geraden Linien aufreihenden Strahlen der vorliegenden Neuheit.
Fig. 3 ist eine schematische Darstellung der in schrägen Linien aufreihenden Strahlen der vorliegenden Neuheit.

### Wege zur Ausführung der Erfindung

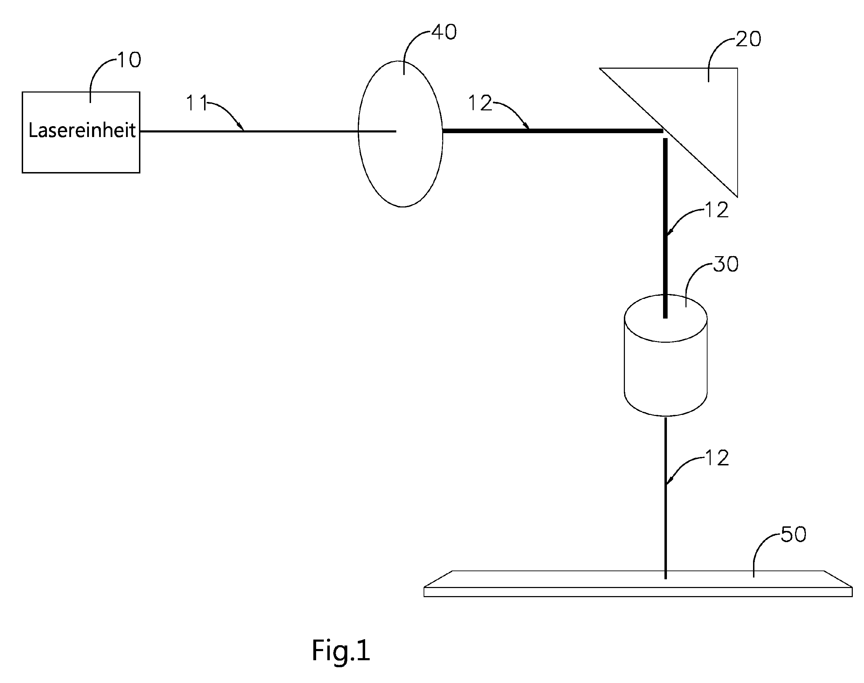

Die Fig. 1-3 sind die schematischen Darstellungen der vorliegenden Neuheit. Die optimal ausgeführte Vorrichtung zum Winkelbestimmen beim Laserstrahlteiler der vorliegenden Neuheit wird in den präzisen Waferbearbeitungsmaschinen und Maskeradierern oder ähnlichen Kontruktionen eingesetzt. Die vorliegende Neuheit ist eine Vorrichtung zum Winkelbestimmen beim Laserstrahlteiler, die eine Lasereinheit 10, einen Refraktor 20 und ein Fokusobjektiv umfasst. Die Lasereinheit kann Strahl 11 ausstrahlen, der durch den Refraktor 20 bis auf das Fokusobjektiv 30 gebrochen wird, wobei der Strahl 11, der aus der Lasereinheit 10 ausstrahlt, ist Laserstrahl.

Bei der vorliegenden Neuheit wird ein Mehrstrahlmodul 40 zwischen der Lasereinheit 10 und dem Refraktor 20 angebracht, sodass der Strahl 11 aus der Lasereinheit 10 zuerst ins Mehrstrahlmodul 40 strahlt, das der eingestrahlte Strahl 22 in Mehrstrahl 12 umwandelt und dann in Form des Mehrstrahls 12 durch den Refraktor 20 auf das Fokusobjektiv 30 bricht. Das Fokusobjektiv 30 befindet sich auf der Waferoberfläsche 50, auf der mehrere Maskegrafiken 51 vorgesehen sind. Die Maskegrafiken 51 sind die Schaltpläne des intetrieten Schaltkreises. Der aus dem Fokusobjektiv 30 ausgestrahte Strahl 11 kann die Waferoberfläche 50 abtasten und radieren bzw. fotoätzen.

Während der Mehrstrahl 12, der vom Strahl 11 aus der Lasereinheit 10 durch Mehrstrahlmodul 40 umgewandelt wird, die Waferoberfläche 40 abtastet und radiert bzw. äztet, können Späne nebenbei leicht erzeugt werden (nicht in Fig. gezeigt). Um diese Späne zu entfernen, wird eine Schutzschicht auf der Waferoberfläche 50 aufgebracht. Nachdem Schneiden wird die Schutzschicht auf der Waferoberfläche 50 mit reinem Wasser abgewaschen.

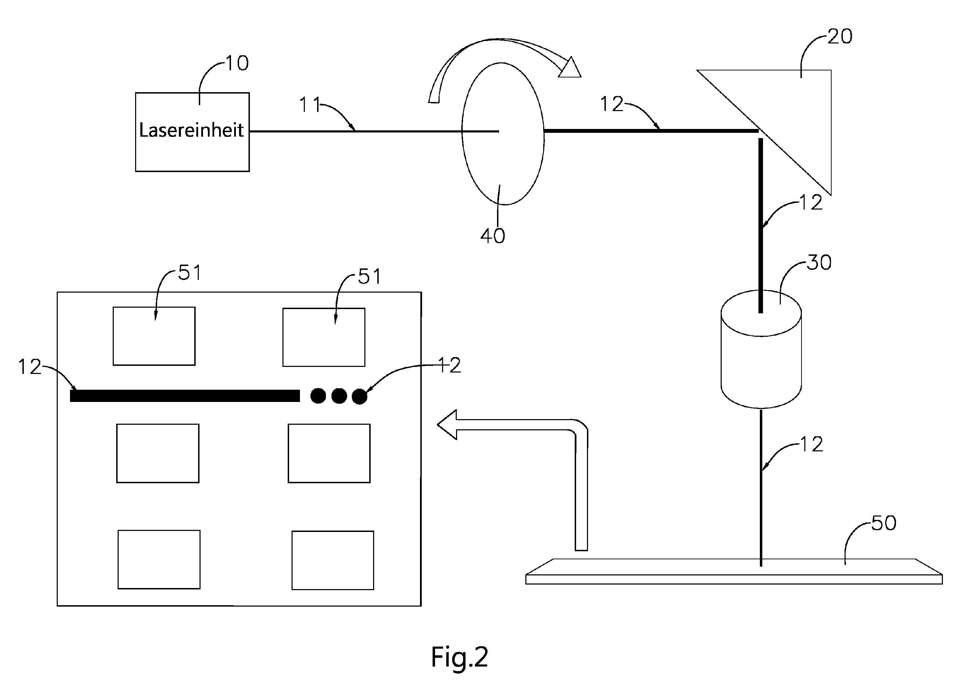

Die Fig. 2 zeigt die erste Ausführug der vorliegenden Neuheit, bei der, wenn die Maskegrafiken 51 gemäß dem Bedarf tiefer geschnitten werden muss, der Strahl 10 aus der Lasereinheit 10 durch Umdrehen des Mehrstrahlmoduls 40 in den in geraden Linien aufreihenden Mehrstrahl 12 umgewandelt werden kann. Der Mehrstrahl 12 des Mehrstrahlmoduls 40 der vorliegenden Neuheit wird mit drei Strahlen dargestellt (der Mehrstrahl 12 des Mehrstrahlmoduls 40 kann auch mehrere Strahlen sein. Dies wird nicht eingeschränkt, wie es sich in der Fig. zeigt). Der in geraden Linien aufgereihte Mehrstrahl 12 kann gebündelt auf den Refraktor 20 und weiter durch den Refraktor 20 gebrochen werden und dann auf das Fokusobjekt 30 strahlen, sodass die Waferoberfäche 50 noch tiefer geschnitten werden kann, wodurch das Ziel des vorherigen und wiederholten Schneiden erreicht werden kann.

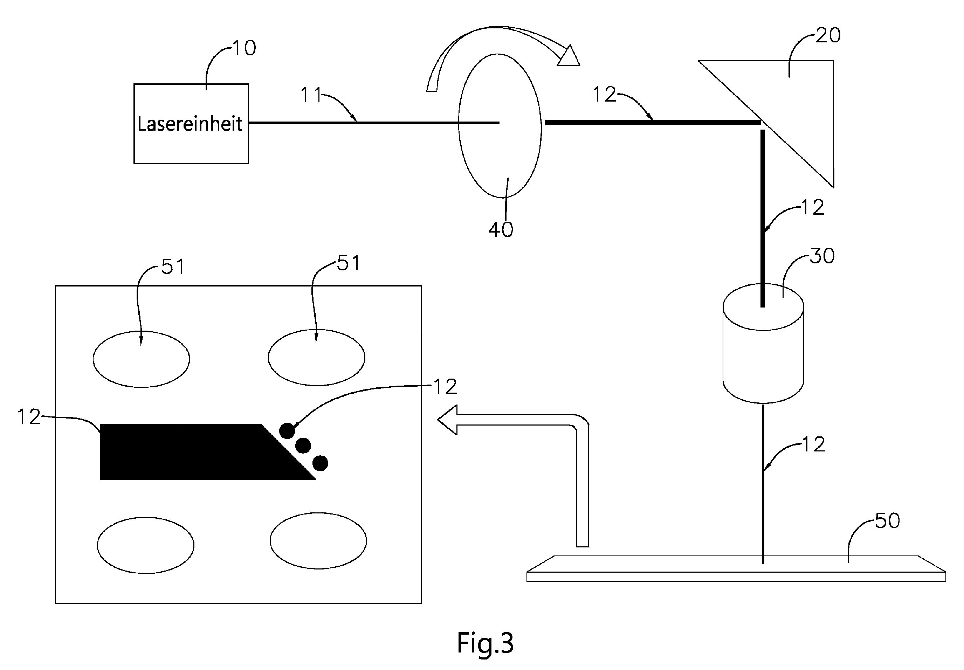

Die Fig. 3 zeigt die zweite Aussführung der vorliegenden Neuheit, bei der, wenn die Maskegrafiken 51 gemäß dem Bedarf Schlitzen geschnitten werden müssen, der Strahl 10 aus der Lasereinheit 10 durch Umdrehen des Mehrstrahlmoduls 40 in den in schrägen Linien aufreihenden Mehrstrahl 12 umgewandelt werden kann. Der Mehrstrahl 12 des Mehrstrahlmoduls 40 der vorliegenden Neuheit wird mit drei Strahlen dargestellt (der Mehrstrahl 12 des Mehrstrahlmoduls 40 kann auch mehrere Strahlen sein. Dies wird nicht eingeschränkt, wie es sich in der Fig. zeigt). Der in schrägen Linien aufgereihte Mehrstrahl 12 kann auf den Refraktor 20 und weiter durch den Refraktor 20 gebrochen werden und dann auf das Fokusobjekt 30 strahlen, sodass auch Schlitzbreite auf der Waferoberfäche 50 geschnitten werden kann und außerdem die Größe der Schlitzbreite durch Drehen des Mehrstrahlmoduls 40 auch eingestellt werden kann (die Schlitzbreite hängt von verschiedenen Produktanforderungen ab), wodurch das Ziel des Schlitzschneidens erreicht werden kann.

Durch die Gestaltung der vorliegenden Neuheit, dass ein Mehrstrahlmodul 40 zwischen der Lasereinheit 10 und dem Refraktor 20 angebracht ist, können das Abtasten und Radieren auf der Maskegrafiken 51 vom Strahl 11 aus der Lasereinheit 10 durch die Einstellung des Mehrstrahlmoduls 40 gesteuert werden. Die Ziele des verschieden Schneidens können außerdem auch durch die Aufreihensweise des Mehrstrahls 12 erreicht werden, sodass die vorliegende Neuheit die Fähigkeiten hat, den Schnitt zu vertiefen und die Schlitzbreite des Schneidens zu steuern, wodurch die praktische Anwendungensmöglichkeiten und die Benutzerfreundlichkeiten insgesamt erhöht werden können.

Durch die obigen detailierten Erklärungen können Diejenigen, die mit dieser Technik vertraut sind, erkennen und verstehen, dass die oben angegebenen Aufgaben mit der vorliegenden Neuheit gelöst werden können. Die Anforderungen eines Patents sind somit entsprochen, sodass ein Patentrecht für die vorliegende Neuheit hiermit beantragt wird.

Die oben angegebene Erklärung ist nur die konkrete Erläuterung der vorliegenden Neuheit anhand einer bevorzugten Ausführung, die jedoch nicht dazu dient, den Umfang des Patenschutzes einzuschränken. Alle Modifikationen oder Änderungen, die auf der Basis der Ideen und Konzepten der vorliegenden Neuheit gemacht werden, gehören immer noch zu den Schutzansprüchen der vorliegenden Neuheit.

### Bezugszeichenliste

- 10: Lasereinheit
- 11: Strahl (Strahl)
- 12: Mehrstrahl (Strahl)
- 20: Refraktor
- 30: Fokusobjektiv
- 40: Mehrstrahl-Modul (Multibeam)
- 50: Waferoberfläche
- 51: Maske Grafiken

Lagerung der biologischen Material
Information über die Lagerung im Inland (Eintragen nach der Reihenfolge: Instutionen, Datum, Nummer der Lagerung)
Information über die Lagerung im Ausland (Eintragen nach der Reihenfolge : Land, Instutionen, Datum, Nummer der Lagerung)
Aufllisten
getrennte Eintragungen auf einer anderen Seite

## Patentansprüche

1. Eine Vorrichtung zum Winkelbestimmen beim Laserstrahlteiler umfasst eine Lasereinheit, einen Refraktor und ein Fokusobjektiv. Die Lasereinheit kann Strahl ausstrahlen, der durch den Refraktor bricht und bis zum Fokusobjektiv weiter strahlt. Das charakteristische Merkmal dabei ist: ein Mehrstrahlmodul ist zwischen der Lasereinheit und dem Refraktor angebracht, sodass der aus der Lasereinheit ausgestahlte Strahl durch die Einstellung des Mehrstrahlmoduls abtasten und radieren kann.

2. Das charakteristische Merkmal der Vorrichtung zum Winkelbestimmen beim Laserstrahlteiler nach dem Anspruch 1 ist **dadurch gekennzeichnet, dass** der Strahl aus der Lasereinheit weiterhin durch Brechen durch das Mehrstrahlmodul in Mehrstrahl umgewandelt werden kann. Durch das Umdrehen des Mehrstrahlmoduls kann der aufreihenden Winkel des Mehrstrahls in geraden Linien angeordnet werden, um tiefer zu schneiden.

3. Das charakteristische Merkmal der Vorrichtung zum Winkelbestimmen beim Laserstrahlteiler nach dem Anspruch 1 ist **dadurch gekennzeichnet, dass** der Strahl aus der Lasereinheit weiterhin durch Brechen durch das Mehrstrahlmodul in Mehrstrahl umgewandelt werden kann. Durch das Umdrehen des Mehrstrahlmoduls kann der aufreihenden Winkel des Mehrstrahls in geraden Linien angeordnet werden, um die Schlitzbreite zu steuern.

4. Das charakteristische Merkmal der Vorrichtung zum Winkelbestimmen beim Laserstrahlteiler nach dem Anspruch 1 ist **dadurch gekennzeichnet, dass** das Fokusobjektiv sich auf der Waferoberfläche befindet und Maskegrafiken auf der Waferoberfläche vorgesehen sind.

5. Das charakteristische Merkmal der Vorrichtung zum Winkelbestimmen beim Laserstrahlteiler nach dem Anspruch 1 ist **dadurch gekennzeichnet, dass** der Strahl aus der Lasereinheit ein Laserstrahl ist.
